# EUROPÄISCHE PATENTANMELDUNG

(11) **EP 3 874 937 A1**
(43) Veröffentlichungstag der Anmeldung: **08.09.2021**
(21) Anmeldenummer: 20160892.4
(22) Anmeldetag: 04.03.2020
(51) Int. Cl.: A01G 13/02

(54) **LÄNGSERSTRECKTES ELEMENT ZUM ABDECKEN NATÜRLICHER BODENOBERFLÄCHEN**

(71) Anmelder: Wurm, Gerhard, 8605 Kapfenberg (AT)
(72) Erfinder: Wurm, Gerhard, 8605 Kapfenberg (AT)
(74) Vertreter: Wirnsberger & Lerchbaum Patentanwälte OG

(57) **Zusammenfassung**

Die Erfindung betrifft ein längserstrecktes Element (1) zum Abdecken natürlicher Bodenoberflächen, insbesondere Rasenflächen, aus denen aus dem Untergrund Objekte (2) wie Pfosten von Zäunen hervorstehen. Um eine Abdeckung von natürlichen Bodenoberflächen in unmittelbarer Nähe von aus dem Untergrund hervorstehenden Objekten (2) zu erreichen, ist erfindungsgemäß vorgesehen, dass das Element (1) mindestens zwei seitliche Ausnehmungen (3) aufweist, wobei die Ausnehmungen (3) unterschiedlich orientiert sind, sodass das aus dem Untergrund hervorstehende Objekt (2) mit einem weiteren Element (1) unter Abdeckung der Bodenoberfläche überlappend umschließbar ist.

## Beschreibung

Die Erfindung betrifft ein längserstrecktes Element zum Abdecken natürlicher Bodenoberflächen, insbesondere Rasenflächen, aus deren Untergrund Objekte wie Pfosten von Zäunen hervorstehen.

Des Weiteren betrifft die Erfindung ein Set mit solchen Elementen.

Des Weiteren betrifft die Erfindung ein Verfahren zum Abdecken natürlicher Bodenoberflächen, insbesondere Rasenflächen, aus deren Untergrund Objekte wie Pfosten von Zäunen hervorstehen.

Des Weiteren betrifft die Erfindung eine Verwendung eines derartigen Elementes.

Der Stand der Technik offenbart Lösungen zum Abdecken von natürlichen Bodenoberflächen. Hierbei wird das Augenmerk hauptsächlich auf die Abdeckung von Rasenflächen in der Nähe von Grundstücksgrenzen gelegt, damit ein sauberer Abschluss erreicht wird und der Rasen nicht darüber hinauswuchert. Da entlang von Grundstücksgrenzen allerdings oftmals Zäune verlaufen, ist eine solcher Abschluss oftmals nicht realisierbar oder erfordert eine mechanische Bearbeitung eines Abdeckelementes, sodass Zaunpfeiler oder dergleichen ausgenommen werden können. Das Anbringen solcher bearbeiteten Elemente ist darüber hinaus oftmals mit erhöhtem Arbeitsaufwand verbunden und ein Wuchern des Rasens in ausgesparten Bereichen kann nicht verhindert werden. Schließlich stellt sich eine erneute Benutzung von auf diese Weise modifizierten Elementen, an anderen Orten als dem ursprünglichen Einsatzort, als schwierig heraus.

In DE 10 2015 016 835 B3 wird ein Mattenelement beschrieben, mit welchem durch möglichst passgenaues Abdecken der Rasenfläche eine wachstumshemmende Wirkung erzielt wird. Dies wird insbesondere durch die Flexibilität des Mattenelementes sowie ein Flächengewicht von mehr als 1000 g/m² erreicht. Nachteilig hierbei ist, dass das Umschließen von Zaunpfosten nur durch nachträgliche Bearbeitung des Mattenelementes und Entfernung sowie Wiedereinsetzen des Zaunpfostens ermöglicht werden kann.

Aus DE 20 2017 103 891 U1 ist eine Bodenbegrenzungsvorrichtung bekannt, deren Grundkörper an einem Ende mit einem Verbindungselement ausgestattet ist, welches die werkzeuglose Verbindung mehrerer Grundkörper zu einer Einheit ermöglicht. Eine Beetabgrenzung oder Rasenkante wird hierbei durch Eingraben des Grundkörpers normal zur Bodenoberfläche geschaffen. Die Möglichkeit des Umschließens von aus der Bodenoberfläche hervorstehenden Objekten, insbesondere von rechteckigen Zaunpfosten, ist allein durch die Art der Installation der Begrenzungsvorrichtung nicht gegeben. Des Weiteren findet mit dieser Vorrichtung keine ausreichende Abdeckung der Bodenoberfläche statt, wodurch der Bewuchs ebendieser nicht verhindert werden kann.

Entsprechend liegt der Erfindung die Aufgabe zugrunde, die oben beschriebenen Nachteile zu vermeiden und ein Element der eingangs genannten Art zu schaffen, mit dem die Abdeckung von natürlichen Bodenoberflächen, insbesondere von Rasenflächen, in unmittelbarer Nähe von aus dem Untergrund hervorstehenden Objekten, wie z. B. Zaunpfeilern, unter Hintanhaltung eines Bewuchses erreicht werden kann.

Darüber hinaus ist es Aufgabe der Erfindung, ein Set mit derartigen Elementen anzugeben.

Des Weiteren ist es Aufgabe der Erfindung, ein Verfahren der eingangs genannten Art anzugeben, das sich auf einfache Weise durchführen lässt.

Eine weitere Aufgabe der Erfindung liegt darin, eine Verwendung eines derartigen Elementes anzugeben.

Diese Aufgabe wird dadurch gelöst, dass das Element der eingangs genannten Art mindestens zwei seitliche Ausnehmungen aufweist, wobei die Ausnehmungen unterschiedlich orientiert sind, sodass das aus dem Untergrund hervorstehende Objekt mit einem weiteren Element unter Abdeckung der Bodenoberfläche überlappend umschließbar ist.

Ein mit der Erfindung erzielter Vorteil ist insbesondere darin zu sehen, dass durch Anbringen des vorgesehenen Elementes der Aufwuchs von Begrünung in direkter Umgebung eines aus dem Untergrund hervorstehenden Objektes, insbesondere eines Zaunpfeilers, sowie entlang mehrerer solcher Objekte, insbesondere entlang eines Zaunverlaufs, verhindert und eine durchgängige Rasenkante gebildet wird. Im Gegensatz zu bereits bekannten Systemen ist keine mechanische Bearbeitung, sondern lediglich das überlappende Anordnen zweier Elemente notwendig, um ein im Wesentlichen passgenaues Umschließen eines Objektes zu ermöglichen. Dies wird durch unterschiedlich orientierte Ausnehmungen am Element erreicht, wobei eine erste Ausnehmung die Bodenoberfläche zum Teil abdeckt und eine zweite Ausnehmung den Umschluss des Objektes vervollständigt. Da der Umschluss durch teilweise Überlappung von zwei Elementen reversibel stattfindet, kann das Element mit geringem Zeitaufwand und ohne Zuhilfenahme von speziellen Utensilien bei Bedarf auch wieder entfernt und andernorts eingesetzt werden. Durch Veränderung der Abmessungen des Elementes, im Wesentlichen Länge, Breite und Dicke, kann jegliche Art von Bodenoberfläche entlang von aus dem Untergrund hervorstehenden Objekten abgedeckt werden.

Die unterschiedlich orientierten seitlichen Ausnehmungen erstrecken sich bevorzugt von einem gedachten Umfang ins Innere des Elementes. Dadurch können die Elemente ohne Weiteres auf Objekte geschoben bzw. um diese angelegt werden. Es kann vorgesehen sein, dass die Flächen der Ausnehmungen ungleich groß sind. Durch die unterschiedlichen Orientierungen der Ausnehmungen wird bei überlappender Anordnung zumindest zweier Elemente ein lösbarer, aber dennoch im Wesentlichen passgenauer, Umschluss von aus dem Untergrund hervorstehenden Objekten unter Abdeckung der umliegenden Bodenoberfläche ermöglicht. In der Regel sind die Ausnehmungen hierfür in einem rechten Winkel zueinander angeordnet. Bei rechteckiger Ausbildung des Elementes befindet sich eine Ausnehmung beispielsweise an einer Breitseite und die zweite Ausnehmung im Bereich der gegenüberliegenden Breitseite, jedoch an der Längsseite positioniert.

Es ist günstig, wenn die seitlichen Ausnehmungen in länglicher Form ausgeführt sind. Der teilweise Umschluss eines Objektes durch eine an der Breitseite des Elementes angeordnete Ausnehmung ermöglicht, abhängig von der Länge der Ausnehmung, die Nutzung ein und desselben Elementes für verschiedene Objektabstände. In überlappender Anordnung zweier Elemente spielt die Positionierung des Objektes in dieser Ausnehmung für den im Wesentlichen passgenauen Umschluss keine Rolle. In anderen Worten: Das Objekt muss nicht zwingend an einem inneren Ende der Ausnehmung umschlossen werden.

Es hat sich bewährt, dass insbesondere bei zwei Ausnehmungen eine Ausnehmung an der Längsseite und eine Ausnehmung an der Querseite des Elementes angeordnet ist. Diese Anordnung ermöglicht bei überlappender Anbringung zweier, insbesondere identischer, Elemente auf einfache Weise den im Wesentlichen passgenauen Umschluss von aus dem Untergrund hervorstehenden Objekten. Hierbei dient eine breitseitige Ausnehmung eines Elementes zur teilweisen Umschließung eines Objektes sowie zur variablen Längenverstellung, wobei die längsseitige Ausnehmung eines zweiten Elementes durch eine überlappende Anordnung zu einem im Wesentlichen passgenauen Umschluss des Objektes führt. Des Weiteren verhindert eine längsseitige Ausnehmung das Verrutschen des Elementes in Längsrichtung, wohingegen eine breitseitige Ausnehmung ein Verrutschen normal zu dieser unterbindet. Alternativ können auch mehrere Ausnehmungen in längs- bzw. breitseitiger Orientierung vorgesehen sein.

Zweckmäßigerweise ist zumindest eine Ausnehmung mit einem Rücksprung versehen. Dieser Rücksprung, der bevorzugt als Nase ausgebildet ist, verhindert das Verrutschen des Elementes bei Anbringung an zumindest zwei aus dem Untergrund hervorstehenden Objekten. Der Rücksprung ist hierbei so ausgebildet, dass dieser am Objekt einschnappt bzw. umgekehrt, wodurch ein Verrutschen des Elementes verhindert ist. Hierfür kann die Nase des Elementes beim Aufstecken elastisch verformt werden. Wenn ein Rücksprung vorgesehen ist, befindet sich dieser vorzugsweise an jener Ausnehmung, welche an der Längsseite angeordnet ist.

Mit Vorteil ist das Element mit schlitzförmigen Ausnehmungen an den Längsseiten versehen. Hierbei lassen sich die Ausnehmungen zweier Elemente ineinander verschränken, sodass eine lose, insbesondere drehbare, Verbindung entsteht. Somit lassen sich beide Elemente in beliebigem Winkel, maximal jedoch 180°, zueinander verdrehen und damit sämtliche Untergrundverläufe passgenau abdecken. In diesem Fall kann auf die Ausnehmungen gegebenenfalls auch verzichtet werden.

Bevorzugt ist das Element aus einem verformbaren Material, vorzugsweise aus Kunststoff oder Vliesstoff, hergestellt. Dadurch kann sich das Element wiederholt an den Oberflächenverlauf verschiedenster Untergründe anpassen. Hierbei wird in weiterer Folge der Aufwuchs von aus der Bodenoberfläche sprießendem Grünzeug verhindert und die Bildung einer scharf abgegrenzten Rasenkante erreicht. Alternativ kann das Element auch aus Materialien wie Metall, Bitumen, Rasenteppichen, Kork, Folien oder, soweit möglich, Mischungen daraus hergestellt sein.

Die Dicke des Elementes sollte ein Maximum von 15 mm, bevorzugt 3 mm bis 12 mm, besonders bevorzugt 5 mm bis 10 mm, nicht übersteigen. Dies stellt einerseits einen bündigen Abschluss, insbesondere bei gestutzter Rasenfläche, sicher, und verhindert andererseits Beschädigungen durch rotierende Messer von Rasenmähern.

Zweckmäßigerweise ist das Element als Rechteck, gegebenenfalls mit abgerundeten Ecken, ausgebildet. Dadurch wird sowohl entlang gerade verlaufenden, insbesondere entlang von Zäunen, als auch eckigen oder kurvigen Bodenbereichen, insbesondere an Grundstücksecken und geschwungenen Wegen, eine durchgehende Abdeckung ermöglicht.

Es ist von Vorteil, wenn das Element eine oder mehrere zur Aufnahme von Befestigungsmitteln vorgesehene Öffnungen aufweist. Diese Elemente können, für den Fall, dass das bloße überlappende Anordnen von Elementen entlang aus dem Untergrund hervorstehender Objekte keine ausreichende Stabilität bietet, zusätzlich mit Befestigungsmitteln im Untergrund verankert werden. Hierfür eignen sich beispielsweise Erdnägel, Spieße oder dergleichen.

Es hat sich bewährt, dass eine oder mehrere Öffnungen, vorzugsweise als Langlöcher ausgebildet, zur variablen Befestigung vorgesehen sind. Durch diese Öffnungen kann in Einsatzgebieten, welche die Nutzung von Befestigungsmitteln erfordern, eine Möglichkeit zur Befestigung der Übergangsbereiche zweier Elemente im Untergrund geschaffen werden. Die Anordnung und/oder Art dieser Öffnungen ermöglicht die Nutzung des Elementes zur Abdeckung natürlicher Bodenoberflächen in unterschiedlicher Länge.

Zweckmäßigerweise weist das Element ein Flächengewicht von weniger als 1000 g/m², bevorzugt von 150 g/m² bis 950 g/m², besonders bevorzugt von 400 g/m² bis 900 g/m², auf. Durch ein geringes Gewicht werden das Anordnen und Entfernen des Elementes erleichtert, ohne dass dadurch die Funktionalität eingeschränkt wäre.
Typische Längen- zu Breitenverhältnisse betragen etwa 10:1 bis 100:1, vorzugsweise 20:1 bis 40:1.

Entsprechend den vorstehenden Ausführungen wird die zweite Aufgabe dadurch gelöst, dass ein Set zumindest zwei erfindungsgemäße Elemente, insbesondere in identischer Ausführung, umfasst.

Das Set kann überdies andere Elemente umfassen oder, in einer Variante, auch nur aus diesen bestehen, nämlich längserstreckte Elemente mit Schlitzen an gegenüberliegenden Längsseiten, welche ein Verbinden von zwei Elementen durch Ineinanderstecken erlauben, sodass auf einfache Weise eine durchgehende Rasenkante geschaffen werden kann.

Die verfahrensmäßige Aufgabe wird erfindungsgemäß dadurch gelöst, dass bei einem Verfahren der eingangs genannten Art durch Anbringung eines Elementes ein aus dem Untergrund hervorstehendes Objekt zumindest teilweise und durch überlappende Anordnung mit einem zweiten Element das Objekt im Wesentlichen passgenau umschlossen wird.

Entsprechend den vorstehend erläuterten Vorteilen besteht eine erfindungsgemäße Verwendung darin, eines oder mehrere erfindungsgemäße Elemente zum lückenlosen Abdecken natürlicher Bodenoberflächen und im Wesentlichen passgenauen Umschließen von aus dem Untergrund hervorstehenden Objekten einzusetzen.

Weitere Merkmale, Vorteile und Wirkungen der Erfindung ergeben sich aus den nachfolgend dargestellten Ausführungsbeispielen. In den Zeichnungen, auf welche dabei Bezug genommen wird, zeigen:
Fig. 1 eine Draufsicht auf eine erste Ausführungsform eines erfindungsgemäßen Elementes;
Fig. 2 eine perspektivische Darstellung eines Elementes gemäß Fig. 1;
Fig. 3 eine Draufsicht einer weiteren Ausführungsform eines Elementes;
Fig. 4 eine perspektivische Darstellung eines alternativen Elementes;
Fig. 5 eine Draufsicht eines umschlossenen Objektes durch zwei Elemente gemäß Fig. 1;
Fig. 6 eine perspektivische Darstellung einer Anwendung mehrerer Elemente gemäß Fig. 1;
Fig. 7 eine Draufsicht einer weiteren Ausführungsform eines Elementes;
Fig. 8 eine Draufsicht einer Anordnung mehrerer Elemente gemäß Fig. 7.

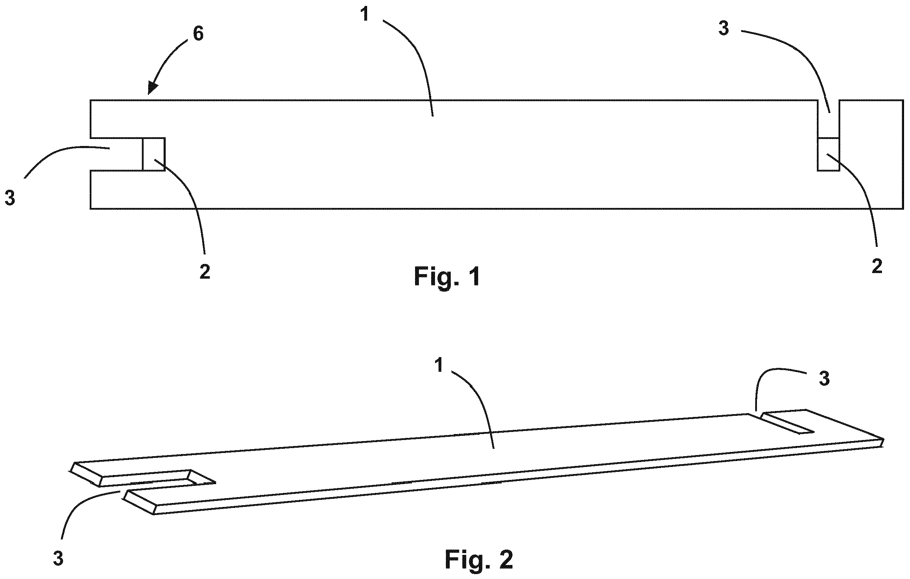

Fig. 1 zeigt eine schematische Darstellung einer ersten Ausführungsform eines Elementes 1 zum Abdecken von natürlichen Bodenoberflächen, aus deren Untergrund Objekte 2, insbesondere Pfosten von Zäunen, hervorstehen. Das Element 1 ist längserstreckt und mit zumindest zwei unterschiedlich orientierten Ausnehmungen 3 versehen. Im Ausführungsbeispiel sind zwei längliche Ausnehmungen 3 vorhanden, wobei eine breitere in Längsrichtung und eine schmälere in Querrichtung orientiert ist. Alternativ können die Ausnehmungen 3 zum Umschließen von Objekten 2 mit quadratischem oder rundem Querschnitt in deren Breite ident ausgeführt und/oder mit abgerundeten Enden versehen sein. In einer maßgeschneiderten Lösung kann die Länge der Ausnehmungen 3 und des Elementes 1 auf den Abstand der hervorstehenden Objekte 2 abgestimmt werden. Im gezeigten Ausführungsbeispiel eines Elementes 1 mit einer rechteckigen Grundform 6 sind zwei Ausnehmungen 3 so angeordnet, dass jede Ausnehmung 3 einen Pfosten 2 teilweise umschließen kann.

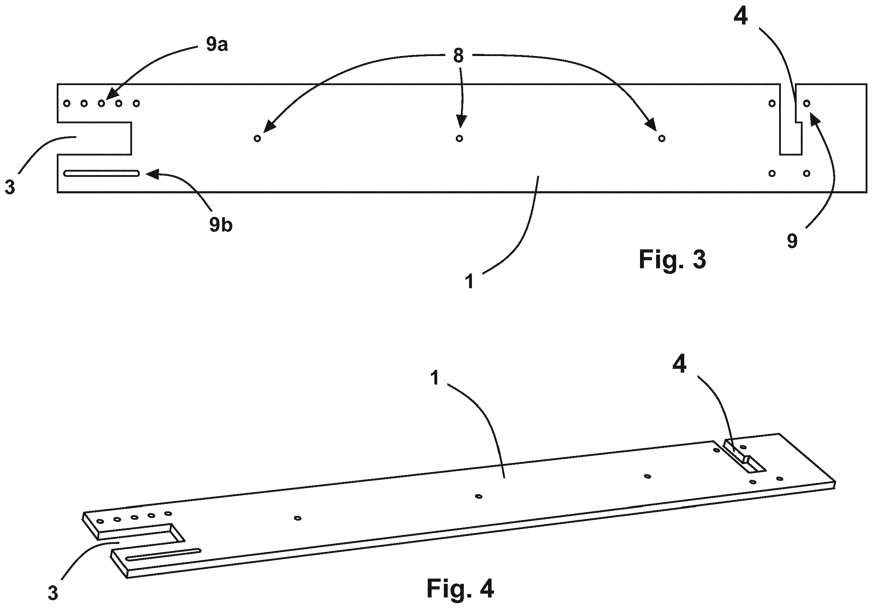

Fig. 2 bzw. Fig. 4 zeigen Darstellungen von Elementen 1 gemäß Fig. 1 bzw. Fig. 3. Diese Darstellungen veranschaulichen die räumliche Ausbildung, insbesondere die Verhältnisse von der Fläche zur Dicke des Elementes 1.

In Fig. 3 ist eine Ausführungsform eines Elementes 1 gezeigt, welche drei Öffnungen 8, insbesondere Bohrungen, zur zusätzlichen Befestigung des Elementes 1 im Untergrund aufweist. Alternativ kann diese Ausführungsform auch mit einer einzigen oder mehreren Öffnungen 8 versehen sein. Neben Bohren können diese Öffnungen 8 auch durch Fräsen, Ätzen, Stanzen, Laserbearbeitung oder andere geeignete Maßnahmen zur Schaffung einer Öffnung 8 getroffen werden. Zusätzlich ist das Element 1 mit weiteren Öffnungen 9a, 9b versehen, welche eine Längenverstellung unter Zuhilfenahme von Befestigungsmitteln, insbesondere Erdnägel oder Spieße, ermöglichen. Diese Öffnungen 9a, 9b können bevorzugt in Form von einzelnen Bohrungen 9a und/oder als Langlöcher 9b ausgeführt sein. Im gezeigten Ausführungsbeispiel sind auf der linken Seite beide Möglichkeiten dargestellt.

Darüber hinaus weist das Element 1 einen Rücksprung 4, bevorzugt als elastisch verformbare Nase ausgebildet, auf, welcher zum einen das Anbringen und Entfernen eines Elementes 1 an einem Pfosten 2 ermöglicht, zum anderen jedoch das Verrutschen im angebrachten Zustand verhindern soll.

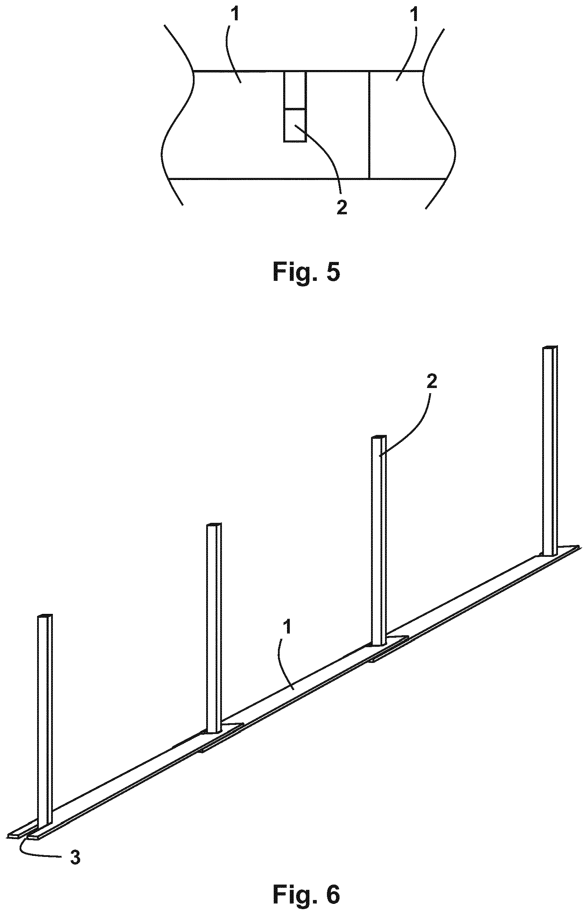

In Fig. 5 ist eine Draufsicht eines von zwei Elementen 1 vollständig umschlossenen Objektes 2 gezeigt. Die auf der rechten Seite in Fig. 1 dargestellte Ausnehmung 3 eines Elementes 1 umschließt, überlappend mit der auf der linken Seite angeordneten Ausnehmung 3 eines identischen zweiten Elementes 1, passgenau einen Pfosten 2. Hierbei wird, durch die unterschiedliche Orientierung der Ausnehmungen 3 zweier Elemente 1 das Objekt 2 so passgenau umschlossen, dass ein Aufwuchs von Begrünung entlang dessen Oberfläche effizient verhindert wird. Dies wird ermöglicht durch ein Aufschieben im Bereich einer ersten Ausnehmung 3, vorzugsweise jener an der Breitseite, wonach eine teilweise Umschließung mit der Ausnehmung 3 der Längsseite erfolgt. Mit dem nächsten Element 1 wird dann der verbleibende Teil um das Objekt 2 abgedeckt. Dabei wirkt eine Ausnehmung 3 an der Längsseite eines ersten Elementes 1 mit der Ausnehmung 3 einer Breitseite eines zweiten Elementes 1 zusammen.

Fig. 6 zeigt eine perspektivische Darstellung einer Verwendung von drei Elementen 1 entlang von vier Objekten 2. Jedes aus dem Untergrund hervorragende Objekt 2 wird an der Bodenoberfläche passgenau von jeweils zwei Elementen 1 umschlossen, und die Bodenoberfläche entlang einer gedachten Geraden, welche mehrere Objekte 2 miteinander verbindet, erfindungsgemäß abgedeckt. Dadurch wird der Aufwuchs von Begrünung, insbesondere von Rasen, entlang dieser Geraden, insbesondere eines Zaunverlaufs, unterbunden.

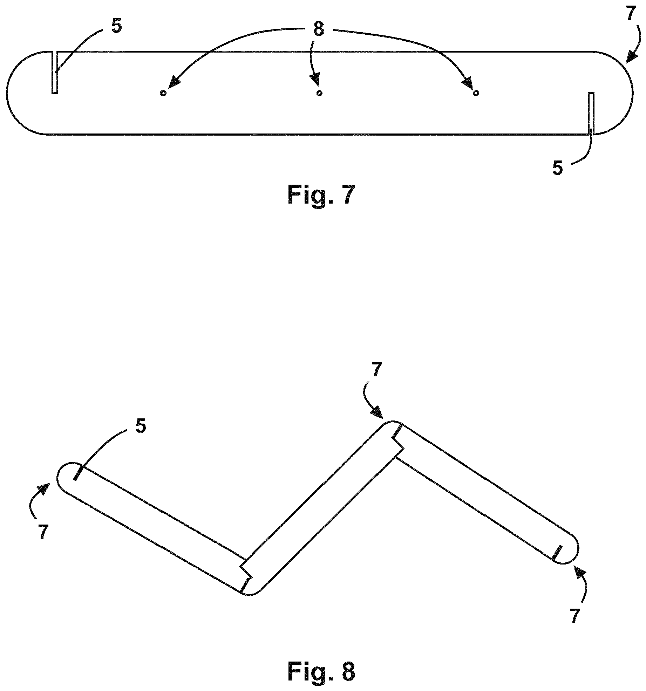

In Fig. 7 ist eine weitere Variante eines längserstreckten Elementes 1 gezeigt, welches abgerundete Ecken 7 aufweist. Die Ecken 7 sind hierbei zum bündigen Abschluss mehrerer zueinander verdrehbar angeordneten Elementen 1 in abgerundeter Form ausgebildet. Auf diese Weise können geschwungene oder eckige Rasenverläufe mit einer zur Form passenden Rasenkante versehen, und zusätzlich die Verletzungsgefahr für Mensch und Tier reduziert werden.

Darüber hinaus weist dieses Ausführungsbeispiel zwei schlitzförmige Ausnehmungen 5 an den gegenüberliegenden Längsseiten auf. Diese ermöglichen das Ineinanderstecken von mehreren Elementen 1, sodass eine reversible und verdrehbare Verbindung entsteht. Alternativ kann das Element 1 auch mehr als zwei Ausnehmungen 5 aufweisen.

Üblicherweise weist ein Element 1 dieser Ausführungsform zusätzliche Öffnungen 8, bevorzugt Bohrungen, zur Aufnahme von Befestigungsmitteln, beispielsweise Erdnägel oder Spieße, auf. Im gezeigten Ausführungsbeispiel sind drei Öffnungen 8 an der Längsachse angeordnet. Alternativ können auch eine oder mehrere Öffnungen 8 auf oder abseits der Längsachse angeordnet sein.

Fig. 8 zeigt eine Draufsicht einer Verwendung mehrerer Elemente 1 gemäß Fig. 7. Hierbei sind mehrere Elemente 1 in unterschiedlichen Winkeln zueinander angeordnet, sodass eine Rasenkante in dargestellter Form gebildet wird. Alternativ zum gezeigten Ausführungsbeispiel können die einzelnen Elemente 1 mit Öffnungen 8 zur Befestigung im Untergrund versehen sein. Ein Set kann neben Elementen 1 gemäß Fig. 1 bis Fig. 4 zusätzlich Elemente 1 gemäß Fig. 7 und Fig. 8 aufweisen, sodass alle Konstellationen in der Gestaltung von Rasenkanten abdeckbar sind.

## Patentansprüche

1. Längserstrecktes Element (1) zum Abdecken natürlicher Bodenoberflächen, insbesondere Rasenflächen, aus denen aus dem Untergrund Objekte (2) wie Pfosten von Zäunen hervorstehen, **dadurch gekennzeichnet, dass** das Element (1) mindestens zwei seitliche Ausnehmungen (3) aufweist, wobei die Ausnehmungen (3) unterschiedlich orientiert sind, sodass das aus dem Untergrund hervorstehende Objekt (2) mit einem weiteren Element (1) unter Abdeckung der Bodenoberfläche überlappend umschließbar ist.

2. Element (1) nach Anspruch 1, **dadurch gekennzeichnet, dass** sich die seitlichen Ausnehmungen (3) von einem gedachten Umfang ins Innere des Elementes (1) erstrecken.

3. Element (1) nach Ansprüche 1 oder 2, **dadurch gekennzeichnet, dass** die seitlichen Ausnehmungen (3) länglich ausgebildet sind.

4. Element (1) nach einem der Ansprüche 1 bis 3, **dadurch gekennzeichnet, dass** eine Ausnehmung (3) an einer Längsseite und eine Ausnehmung (3) an einer Breitseite angeordnet ist.

5. Element (1) nach einem der Ansprüche 1 bis 4, **dadurch gekennzeichnet, dass** zumindest eine Ausnehmung (3) mit einem Rücksprung (4) versehen ist.

6. Element (1) nach einem der Ansprüche 1 bis 5, **dadurch gekennzeichnet, dass** das Element (1) mit schlitzförmigen Ausnehmungen (5) an den Längsseiten versehen ist.

7. Element (1) nach einem der Ansprüche 1 bis 6, **dadurch gekennzeichnet, dass** das Element (1) aus einem verformbaren Material, vorzugsweise aus Kunststoff oder Vliesstoff, gebildet ist.

8. Element (1) nach einem der Ansprüche 1 bis 7, **dadurch gekennzeichnet, dass** das Element (1) als Rechteck (6), gegebenenfalls mit abgerundeten Ecken (7), ausgebildet ist.

9. Element (1) nach einem der Ansprüche 1 bis 8, **dadurch gekennzeichnet, dass** eine oder mehrere Öffnungen (8) zur Aufnahme von Befestigungsmitteln vorgesehen sind.

10. Element (1) nach einem der Ansprüche 1 bis 9, **dadurch gekennzeichnet, dass** eine oder mehrere Öffnungen (9a), insbesondere Langlöcher (9b), zur variablen Befestigung vorgesehen sind.

11. Element (1) nach einem der Ansprüche 1 bis 10, **dadurch gekennzeichnet, dass** das Element (1) ein Flächengewicht von weniger als 1000 g/m², bevorzugt von 150 g/m² bis 950 g/m², besonders bevorzugt von 400 g/m² bis 900 g/m², aufweist.

12. Set zum Abdecken natürlicher Bodenoberflächen, insbesondere Rasenflächen, aus denen aus dem Untergrund Objekte (2) wie Pfosten von Zäunen hervorstehen, **dadurch gekennzeichnet, dass** zumindest zwei Elemente (1) nach einem der Ansprüche 1 bis 11, insbesondere zumindest zwei identische Elemente (1), vorgesehen sind.

13. Verfahren zum Abdecken natürlicher Bodenoberflächen, vorzugsweise von Rasenflächen, insbesondere mit zumindest einem Element (1) nach einem der Ansprüche 1 bis 11, wobei aus dem Untergrund hervorstehende Objekte (2) wie Pfosten von Zäunen umschlossen werden, **dadurch gekennzeichnet, dass** durch Anbringung eines Elementes (1) ein aus dem Untergrund hervorstehendes Objekt (2) zumindest teilweise und durch überlappende Anordnung mit einem zweiten Element (1) das Objekt (2) im Wesentlichen passgenau umschlossen wird.

14. Verwendung eines oder mehrerer Elemente (1) nach einem der Ansprüche 1 bis 11 zum lückenlosen Abdecken natürlicher Bodenoberflächen, insbesondere Rasenflächen, und im Wesentlichen passgenauen Umschließen von aus dem Untergrund hervorstehenden Objekten (2), insbesondere von Zaunpfosten.
